(19) Europäisches Patentamt
European Patent Office
Office européen des brevets

(11) Numéro de publication: **0 021 897**
**B1**

(12) # FASCICULE DE BREVET EUROPEEN

(45) Date de publication du fascicule du brevet: **02.11.83**

(51) Int. Cl.$^3$: **H 04 B 9/00**, H 01 Q 3/36

(21) Numéro de dépôt: **80400769.8**

(22) Date de dépôt: **30.05.80**

(54) **Système de liaison optique pour l'échange bidirectionnel de données entre une unité centrale et des unités périphériques, et son utilisation dans une antenne à balayage électronique.**

(30) Priorité: **12.06.79 FR 7914994**

(43) Date de publication de la demande:
**07.01.81 Bulletin 81/1**

(45) Mention de la délivrance du brevet:
**02.11.83 Bulletin 83/44**

(84) Etats contractants désignés:
**DE GB IT NL SE**

(56) Documents cités:
**FR - A - 2 252 709**
**FR - A - 2 275 078**
**FR - A - 2 362 413**
**FR - A - 2 377 047**
**FR - A - 2 418 943**
**US - A - 3 874 780**
**US - A - 3 952 265**
**US - A - 4 124 272**

(73) Titulaire: **THOMSON-CSF**
**173, Boulevard Haussmann**
**F-75379 Paris Cedex 08 (FR)**

(72) Inventeur: **d'Auria, Luigi**
**"THOMSON-CSF" - SCPI 173, bld Haussmann**
**F-75360 Paris Cedex 08 (FR)**
Inventeur: **Auvray, Gérard**
**"THOMSON-CSF" - SCPI 173, bld Haussmann**
**F-75360 Paris Cedex 08 (FR)**
Inventeur: **Desormiere, Bernard**
**"THOMSON-CSF"SCPI 173, bld Haussmann**
**F-75360 Paris Cedex 08 (FR)**

(74) Mandataire: **Lepercque, Jean et al,**
**THOMSON-CSF SCPI 173, Bld Haussmann**
**F-75379 Paris Cedex 08 (FR)**

**EP 0 021 897 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

# Système de liaison optique pour l'échange bidirectionnel de données entre une unité centrale et des unités périphériques et son utilisation dans une antenne à balayage électronique

La présente invention se rapporte à un système de liaisons optiques pour l'échange bidirectionnel de données entre une unité centrale et des unités périphériques, et en particulier des unités périphériques solidaires d'un bâti animé d'un mouvement de rotation.

Le système selon l'invention s'applique plus particulièrement à certaines antennes de radar du type à balayage électronique. Pour ce type d'antennes, on associe à la rotation mécanique de l'aérien une déviation électronique du faisceau, ce dans un cône d'axe perpendiculaire au plan de l'antenne et passant par son centre. La déviation électronique est obtenue en commandant l'état de phase de modules déphaseurs situés sur la face avant du plan de l'antenne. L'ordre de grandeur du nombre de modules déphaseurs est de un millier.

La phase de chaque module déphaseur est calculée, puis affichée par un ensemble de circuits de calcul situés sur la partie tournante de l'antenne. Les données d'entrée sont élaborées par un calculateur central du radar situé dans la partie fixe de celui-ci. Il est donc nécessaire de transmettre ces informations à la partie tournante et de recevoir en retour des informations de contrôle en provenance des modules déphaseurs. Ces échanges s'effectuent, selon l'art connu, par l'intermédiaire d'un joint tournant comprenant un collecteur à bagues et par l'intermédiaire de liaisons électriques. Ce collecteur à bagues est lourd et encombrant car, en plus des bagues destinées à la transmission des signaux d'information, il comprend des bagues de puissance. En outre de nombreuses précautions doivent être prises pour assurer la sécurité des transmissions:

— contact par plusieurs balais;

— protection contre les oxydations afin d'éviter les défauts de contact si l'antenne ne tourne pas pendant un certain temps;

— répartition judicieuse des bagues de signaux et des bagues de puissance sur le collecteur, afin de ne pas dépasser le niveau maximum de mode commun des émetteurs et des récepteurs de ligne utilisés dans les liaisons électriques et, en cas de défaillance mécanique, d'interdire la possibilité de contact direct entre les bagues de puissance et les fils véhiculant les signaux d'information;

— dispositions prises pour un retour de masse de bonne qualité.

Toutes ces précautions ont pour effet, entre autre, de limiter le débit possible d'échange d'informations. Les cadences de transmission sont typiquement limitées à 1 Mbit/s, les transmissions s'effectuent en général par échange de signaux de type impulsionnel. Ceci conduit à dédoubler les voies de communications: une voie "montante" unidirectionnelle pour la liaison calculateur central-unités périphériques et une voie "descendante" unidirectionnelle pour la liaison inverse.

Pour pallier ces inconvénients, l'invention va proposer un système de liaisons utilisant des fibres optiques pour assurer l'échange bidirectionnel de données entre le calculateur central et l'ensemble de circuits de calcul situé dans la partie tournante de l'antenne. L'utilisation de liaisons optiques a pour avantage de rendre ces liaisons insensibles au parasitage et aux "crachements" dûs aux bagues de puissance. En outre, une défaillance mécanique du collecteur ne peut entrainer la destruction des circuits électroniques et les cadences de transmission peuvent atteindre typiquement 10 Mbits/s.

Des liaisons par voie optique entre deux ensembles fixes constitués par un unité centrale et des périphériques sont connues, entre autre, par le brevet US—A—3 874 780 (LOVE). Il est décrit, notamment à la figure 1, une liaison comprenant un canal principal relié à une extrémité à l'unité centrale et un faisceau de fibres reliées chacune par une de leurs extrémités à un périphérique. La jonction entre ces deux ensembles est réalisée à l'aide d'un coupleur, objet principal de ce brevet, réalisé sous forme d'un élément discret, cet élément discret étant un barreau en matériau réfringent.

L'invention est plus particulièrement concernée par une architecture particulière de système de liaisons autorisant une répartition différente des circuits électroniques entre la partie tournante et la partie fixe de l'antenne allant dans le sens d'une simplification des circuits électroniques situés sur la partie tournante, plus difficilement accessibles pour la mise au point et la maintenance. De façon plus générale l'invention est concernée par un système de liaisons bidirectionnelles dans un appareil fonctionnellement dissymétrique comprenant un premier ensemble fixe et un second éloigné et difficile d'accès.

L'invention a donc pour objet un système de liaison optique pour l'échange bidirectionnel de données entre une unité centrale et des unités périphériques comprenant des premiers moyens de liaison par fibres optiques couplés à des premiers organes émetteur et détecteur d'énergie rayonnante solidaires de l'unité centrale; des moyens dérivateurs-mélangeurs pour faisceau de fibres optique; et des seconds moyens de liaison par fibres optiques couplés à des seconds organes émetteurs et détecteurs d'énergie rayonnante solidaires des unités périphériques; lesdits premiers moyens de liaison comportant une fibre optique unique, constituant une voie d'échange de données unidirectionnelle couplée par une extrémité auxdits moyens dérivateurs-mélangeurs, caractérisé en ce que le premier organe détecteur d'énergie rayonnante est constitué par une photodiode dont la zone active est dotée d'une structure annulaire, la photodiode présentant à l'intérieur de cette structure annulaire un passage de diamètre intérieur égal ou supérieur au diamètre extérieur de la fibre optique unique, pour être enfilée sur cette fibre au voisinage de l'extrémité couplée auxdits moyens dérivateurs-mélangeurs et couplée

sans moyen de liaison intermédiaire à ces moyens dérivateurs-mélangeurs, et en ce que le premier organe émetteur d'énergie rayonnante est constitué par une source laser couplée à l'autre extrémité de la fibre optique unique.

L'invention a également pour objet l'utilisation d'un tel système dans une antenne à balayage électronique d'une onde électromagnétique émise par un aérien animé d'un mouvement de rotation selon la revendication 5.

D'autres particularités et avantages de l'invention apparaîtront plus clairement à l'aide de la description ci-après et des figures annexées parmi lesquelles:

— la figure 1 illustre une antenne à balayage électronique selon l'art connu;

— la figure 2 illustre le schéma de principe d'un système de liaison optique bidirectionnelle;

— les figures 3 à 6 illustrent des détails du système de liaison optique de la figure 2.

Dans ce qui suit, à titre d'illustration, le système de liaison optique selon l'invention sera décrit dans le cadre particulier d'une antenne à balayage électronique, sans que la portée de l'invention en soit pour autant limitée à cette seule application.

Sur la figure 1 est schématisée une antenne à balayage électronique de l'art connu. L'antenne comprend essentiellement une partie mobile, constituée par l'aérien 1 et son axe d'entrainement 2, et une partie fixe comprenant, entre autre, un calculateur central et un pointeur, tous deux sous la référence générale $P_0$. Comme il est bien connu, l'aérien est animé d'un mouvement de rotation $\omega$ autour de l'axe 2. Dans ce type particulier d'antenne, on associe à la rotation mécanique de l'aérien 1 une déviation électronique du faisceau, dans un cône d'axe perpendiculaire au plan de l'antenne et passant par son centre O. Pour ce faire, on commande l'état de phase de modules déphaseurs (non représentés) à l'aide d'un ensemble de circuits de calcul solidaires de la partie tournante de l'antenne. Sur la figure 1, ces modules de calcul, au nombre de douze, sont référencés $P_1$ à $P_{12}$.

Ces circuits de calcul appelés dans ce qui suit unités périphériques commandent donc l'état de phase d'environ un millier de modules déphaseurs. Une partie des calculs nécessaires à la détermination de l'état de phase est effectuée de façon centralisée par le calculateur central $P_0$. On doit donc assurer des liaisons, d'une part, entre ce calculateur $P_0$ et les unités périphériques $P_1$ à $P_{12}$ et, d'autre part, des liaisons en sens inverse permettant de transmettre au calculateur central $P_0$ des données de contrôle en provenance des unités périphériques. Les données nécessaires au calcul décentralisé consistent par exemple en trois valeurs d'incrément de phase (3 mots de 16 bits).

Ces données d'entrée sont calculées par le calculateur central du radar $P_0$ en fonction de la déviation électronique du faisceau à réaliser et de la fréquence d'émission. Elles transitent par un organe d'interface appelé pointeur, pour être transmise aux unités périphériques. La liaison s'effectue par l'intermédiaire du connecteur $C_{N2}$, les liaisons 7, du connecteur $C_{N1}$, le collecteur à bague 3, les liaisons 10 et 8. Les unités périphériques $P_1$ à $P_{12}$ sont couplées en parallèle par les liaisons 9 aux liaisons omnibus 8. Le collecteur à bague 3 comprend une partie fixe munie de pistes 5 ou bagues de signal et une partie mobile 4 solidaire de l'axe de rotation 2 comportant des frotteurs 6. Les bagues de puissance pour l'alimentation en énergie de l'aérien n'ont pas été représentées sur la figure 1. On doit cependant assurer une répartition judicieuse entre les bagues de signal 5 et ces bagues de puissance pour assurer un bon fonctionnement de l'ensemble et notamment pour minimiser tous risques de destruction des circuits électroniques reliés aux liaisons de signaux.

Les liaisons entre le calculateur central $P_0$ et les unités périphériques $P_1$ à $P_{12}$ se font par l'intermédiaire de lignes bifilaires associées à des émetteurs et des récepteurs de lignes satisfaisant à des normes préétablies, par exemple les normes E I A R S 442. Par précaution, pour garantir l'intégrité des liaisons, la vitesse de transmission est limitée à environ 1 Mbit/s. Ceci conduit typiquement à adopter une liaison redondante à trois paires blindées de structure omnibus, les douze boitiers de calcul étant branchés sur cet omnibus 8 par l'intermédiaire des liaisons 9.

Du calculateur, via le pointeur, les mêmes informations sont transmises en parallèle aux douze boitiers de calcul. Ces informations reviennent au pointeur pour vérification de la bonne transmission. En outre, des informations de test élaborées par les unités périphériques doivent être transmises au pointeur et au calculateur central. Un seul boitier de calcul à la fois renvoie ces informations vers le calculateur.

Divers procédés bien connus de l'homme de métier peuvent être utilisés pour assurer une procédure correcte d'échanges du type conversationnel et ne seront pas décrits plus avant. Ces procédures ont notamment pour but d'assurer un multiplexage en temps correct.

Bien que couramment utilisé, le système d'échange par voie électrique qui vient d'être décrit présente les inconvénients qui ont été rappelés précédemment. L'invention va permettre de s'affranchir en grande partie des limitations inhérentes à ce système de liaisons par voie électrique.

Le système de liaison optique selon l'invention va maintenant être décrit en relation avec les figures 2 à 6.

La figure 2 illustre l'architecture du schéma de principe du système de liaison optique bidirectionnelle. Le système est divisé en deux parties principales: un ensemble fixe UF, comprenant notamment un calculateur central $P_0$, et un ensemble mobile animé d'un mouvement de rotation $\omega$:UM. Ce dernier ensemble comprend des organes périphériques analogues à ceux de la figure 1: $P_1$ à $P_i$.

L'indice i pouvant varier de 1 à n, n étant égal à 12 dans l'exemple décrit en relation avec la figure

1. Le système de liaison proprement dit se divise luimême en trois parties principales:
— des fibres de liaison $F_1$ à $F_i$ dans l'ensemble mobile UM, et $FE_0$ et $FR_0$ dans l'ensemble fixe;
— des fibres mélangeuses, respectivement $Fc_2$ et $Fc_1$;
— et un joint optique tournant CT.

La liaison réalisée par le système de l'invention est bidirectionnelle à l'alternance entre l'unité centrale $P_0$ et les unités périphériques $P_i$. L'information émise par l'émetteur $E_0$ de l'unité centrale $P_0$ peut être transmise simultanément à tous les terminaux secondaires ou unités périphériques $P_i$ et détectée par les récepteurs $R_i$.

L'information émise par chaque unité périphérique $P_i$ peuit être transmise en temps partagé par l'intermédiaire de l'émetteur $E_i$ à l'unité centrale $P_0$ et détectée par le récepteur $R_0$. Lorsque deux unités périphériques veulent communiquer entre elles, elles peuvent le faire en passant par l'unité centrale $P_0$. Pour ce faire on peut, par exemple, en associant une mémoire tampon à l'unité centrale $P_0$, utiliser les techniques bien connues dites de "boîte aux lettres", ou tout autre procédé qui sort du cadre de l'invention.

Les dispositions retenues pour la mise en oeuvre du système de liaison optique selon l'invention concourent à la création d'une structure minimisant les pertes d'énergie et permettent une répartition optimisée des circuits électroniques entre l'unité centrale $P_0$ et les unités périphériques $P_i$. En particulier le débit important permis par les liaisons optiques autorise l'utilisation d'une voie de transmission bidirectionnelle, le type assymétrique au lieu de deux liaisons unidirectectionnelles séparées.

Avant de décrire avec plus de détails, les dispositions retenues par l'invention, il parait utile de rappeler les principales lois régissant les phénomènes optiques mis en oeuvre dans l'invention.

Si Pu(E) est la puissance émise par une source d'énergie rayonnante (par exemple par un laser semi-conducteur) et que, sur le chemin optique suivi par la lumière émise, soient disposées plusieurs fibres optiques connectées en cascade, la puissance reçue par un récepteur Pu(R) (par exemple une diode photodétectrice) est définie par la relation:

$$Pu(R) = k\,\tau\,\frac{Pu(E)}{N} \qquad (1)$$

relation dans laquelle:

N est le nombre de fibres optiques secondaires (par exemple $F_i$ sur la figure 2) en parallèle émergeant d'une fibre principale (par exemple $Fc_2$);

k (< 1) est un facteur tenant compte des pertes de couplage aux interfaces;

$\tau$ est le taux de remplissage à l'interface de deux fibres optiques en cascade. Par exemple à l'interface $Fc_2/F_i$, le taux de remplissage est défini par la relation:

$$\tau_1\,(Fc_2/F_i) = \frac{\text{sommes des aires des coeurs des } F_i}{\text{air du coeurs de } Fc_2} \qquad (2)$$

Pour effectuer le bilan énergétique on peut exprimer les puissances émises et les pertes par couplage en décibels que l'on peut additionner algébriquements. Par convention une puissance-optique émise de 1 mW correspond à 0 dBm. (3)

Les dispositions retenues dans le cadre de l'invention vont maintenant être décrites de façon détaillée.

La première disposition concerne les ouvertures numériques relatives (O.N.) des diverses fibres optiques disposées sur le chemin optique, ce aussi bien dans le sens montant ($P_0 \rightarrow P_i$) que dans le sens descendant ($P_i \rightarrow P_0$).

Il est rappelé que l'ouverture numérique est définie par la relation:

$$O.N. = \sqrt{n_1^2 - n_2^2} \qquad (4)$$

relation dans laquelle $n_1$ et $n_2$ sont les indices de réfraction respectifs de la partie centrale et de la partie périphérique d'une fibre optique.

Pour réduire les pertes de couplage, on a intérêt à choisir:

$$O.N.\,(F_i) = O.N.\,(Fc_2) = O.N.\,(Fc_1) \qquad (5)$$

$$O.N.\,(FE_0) \leq O.N.\,(Fc_1) \qquad (6)$$

$$O.N.\,(FR_0) \geq O.N.\,(Fc_1) \qquad (7)$$

La deuxième disposition concerne le joint tournant et la fibre mélangeuse. La solution purement électrique décrite en relation avec la figure 1, impose un collecteur à bagues multivoies compte tenu du

faible débit autorisé par les liaisons électriques. Tout au contraire, les liaisons optiques à gros débit (10 Mbit/s) permettent un multiplexage dans le temps et l'utilisation d'une fibre mélangeuse unique. Le joint tournant optique est situé selon l'invention sur la fibre mélangeuse, c'est-à-dire au niveau du canal optique de plus grande section afin d'augmenter les tolérances mécaniques et, par la même, de réduire les variations d'intensité dûes à la rotation.

Ce joint tournant peut être du type de celui illustré par la figure 3. Ce joint comporte un embout mâle 133 et un embout femelle 33 agencés pour former un arbre 43 tournant dans un manchon 53 selon un ajustement déterminé, un dispositif de butées 63—61 et 73—71 délimitant le déplacement axial du machon, des moyens de centrage 83 et 93 des extrémités des fibres optiques mélangeuses $Fc_1$, $Fc_2$ et des moyens de fixation aux corps extérieurs constitués, d'une part, par un plateau fixe 14, compris par exemple dans le chassis de l'unité centrale $P_0$ et, d'autre part, par l'arbre d'entrainement 2 de la partie mobile de l'antenne. Ces moyens de fixation forment respectivement un couplage rigide 103 et semi-rigide: 11, 12 et 13. Ce joint tournant assure seulement la jonction optique rotative d'axe $\Delta$ entre l'unité centrale, le solidaire de la partie fixe UF de l'antenne, et la partie mobile UM de l'antenne. Des moyens supplémentaires non représentés assurent le couplage mécanique entre l'arbre d'entrainement 2 et la partie fixe UM de l'antenne. Ce sont ces moyens qui doivent notamment supporter le poids de l'aérien et de son arbre d'entrainement 2. Ces moyens assurent également la distribution à l'aide de collecteurs à bague des signaux électriques de puissances nécessaires au bon fonctionnement de l'antenne.

La fibre mélangeuse peut être constituée pour sa part par un coupleur multivoies de tout type approprié et, à titre d'exemple non limitatif, par le coupleur multivoies pour liaisons optiques proposé dans la demande de brevet français N° 77.12.954, déposée au nom de la demanderesse le 29 Avril 1977 et publiée sous le N° 2 389 150; coupleur dans lequel on aura inséré le joint optique tournant qui vient d'être décrit en divisant en deux parties la fibre optique, la première partie $Fc_1$ étant située dans l'unité fixe UF et la seconde partie $Fc_2$ dans l'ensemble mobile UM comprenant les unités périphériques $P_i$. L'ensemble constitue un dérivateur-mélangeur de faisceaux optiques.

En outre, l'efficacité d'une telle fibre mélangeuse est grandement améliorée lorsqu'elle est très longue. Cette condition est en général difficile à réaliser lorsque le coupleur doit être utilisé en tant que composant discret, se présentant sous la forme d'un module de dimensions réduites.

Dans le cadre de l'invention, la localisation de la fibre mélangeuse dans le système de liaison optique et son utilisation en tant que canal principal de liaison bidirectionnel unique n'imposent aucune restriction quant à sa longueur. Les interfaces $Fc_1/FE_0$ et $Fc_1/FR_0$ d'une part, et l'interface multiple $Fc_2/F_i$ d'autre part, peuvent être disposés respectivement au voisinage immédiat de l'unité centrale $P_0$ et de l'ensemble d'unités périphériques $P_i$.

La troisième et dernière disposition concerne les fibres de liaison optique et les composants actifs couplés à ces fibres, c'est-à-dire les composants émetteurs et/ou récepteurs. On peut considérer que la puissance optique émise par l'unité centrale fixe $P_0$ n'est pas limitée. En effet, on dispose de toute l'énergie dont on peut avoir besoin sans restriction de volume. Aussi on utilise deux composants distincts comme émetteur $E_0$ et comme récepteur $R_0$. $E_0$ peut être un laser semiconducteur et, par exemple non limitatif, la source laser à semiconducteur décrite dans la demande de brevet français N° 78.14.762, déposée le 18 Mai 1978 au nom de la demanderesse et publiée sous le numéro 2 426 347. $R_0$ peut être une photodiode PIN au silicium.

Dans l'unité mobile UM il y a lieu de n'utiliser qu'une fibre optique par unité périphérique qui assure la liaison bidirectionnelle entre une unité périphérique $P_i$ et la fibre mélangeuse $Fc_2$. On couple cette fibre à un composant $E_i/R_i$ capable de fonctionner en émetteur et en détecteur de lumière de la même longueur d'onde, alternativement. Ce composant est de préférence une diode semiconductrice décrite dans la demande de brevet français N° 77.18.616, déposée le 27 Juin 1977 au nom de la demanderesse, et publiée sous le numéro 2 396 419 concernant une diode semiconductrice qui, polarisée dans le sens direct, émet de la lumière, et qui, polarisée en sens inverse, est susceptible de détecter de la lumière. Cette disposition particulière permet également de doubler la puissance optique reçue par rapport à la solution consistant à utiliser un émetteur et un récepteur de lumière distincte, ainsi que deux fibres optiques par unité périphérique $P_i$.

En considérant les brillances respectives des émetteurs envisagés, le couplage entre l'unité centrale fixe $P_0$ et la fibre mélangeuse $Fc_1$ peut être réalisé à l'aide d'un coupleur.

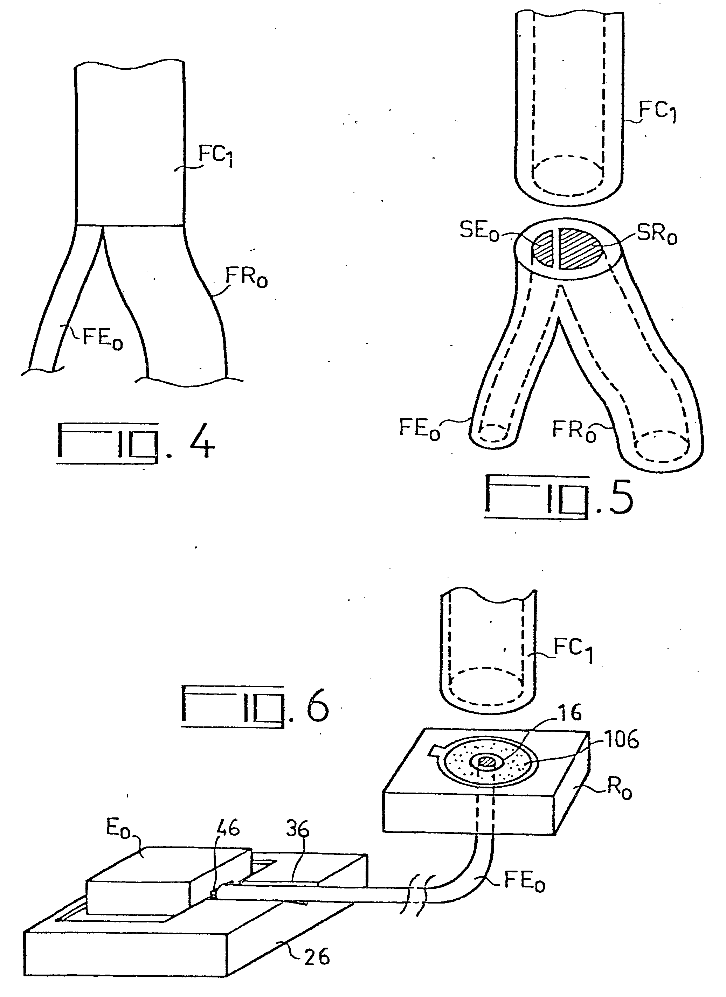

Le coupleur peut être du type passif dissymétrique, constitué par deux branches de différentes sections tel qu'illustré sur les figures 4 et 5. La fibre émettrice $FE_0$ possède une section utile $SE_0$. La fibre réceptrice $FR_0$ possède une section utile $SR_0$. Les deux sections sont telles que $SE_0 < SR_0$.

Selon l'invention, la photodiode $R_0$ ayant une aire supérieure ou égale à l'aire du coeur de la fibre mélangeuse $Fc_1$, cette diode est percée d'un évidement central 1 par lequel passe la fibre $FE_0$, comme illustré sur la figure 6, la zone active 106 ayant une structure annulaire. La photodiode $R_0$ est alors plaquée directement contre le coeur de la fibre mélangeuse $Fc_1$. Cette structure de diode peut être obtenue par attaque chimique, ce pour la réalisation de l'évidement central. Pour assurer la voie montante une fibre émettrice $FE_0$ traverse en 16 la diode $R_0$ et conduit la lumière émise par une source laser $E_0$. Cette source laser peut être constituée par la source décrite dans la demande de brevet français précitée. Le support de la source 26 comporte une rainure 36 permettant de positionner la

fibre émettrice $FE_0$ par rapport à la pupille 46 du laser.

Les éléments constitutifs du système de transmission selon l'invention étant précisés, on peut établir le bilan énergétique à l'aide du tableau I en tenant compte des relations (1) à (7). Dans la partie supérieure de ce tableau, sont rassemblées des données typiques correspondant à une réalisation selon les Fig. 4 et 5.

TABLEAU I

| | |
|---|---|
| — N = nombre de terminaux secondaires | = 12 |
| — diamètre émission/réception de $E_i/R_i$ | = 200 $\mu$m |
| — diamètre de coeur d'une fibre $F_i$ | = 200 $\mu$m |
| — ouverture numérique de $F_i$, $Fc_1$ et $Fc_2$ | = 0,26 |
| — diamètre de coeur de $FE_0$ | = 100 $\mu$m |
| — $\tau_1$: taux de remplissage | = 0,5 |
| — $\tau_2$: taux de remplissage | = 0,8 |
| — puissance émise par $E_0$ | = 2mW(3dBm) |
| — puissance émise par $E_i$ | =1mW(OdBm) |
| — sensibilité de $R_i$ et $R_0$ | = 0,5 A/W |

| Pertes sens montant | |
|---|---|
| — perte au couplage $E_0/FR_0$ | = 3 dB |
| — perte au couplage $FE_0/Fc_1$ | = 1 dB |
| — perte au couplage $Fc_1/Fc_2$ | = 1 dB |
| — perte au couplage $Fc_2/F_i$ | = 1 dB |
| — perte au couplage $F_i/R_i$ | = 0,5 dB |
| — séparation en N:12 pertes | = 10,8 dB |
| — $\tau_1$ = 0,5 perte | = 3 dB |
| | pertes totales = 20,2 dB |

| Pertes sens descendant | |
|---|---|
| — perte au couplage $E_i/F_i$ ($0{,}26^2$) | = 11,7 dB |
| — perte au couplage $F_i/Fc_2$ | = 1 dB |
| — perte au couplage $Fc_2/Fc_1$ | = 1 dB |
| — perte au couplage $Fc_1/FR_0$ | = 1 dB |
| — $\tau_2$ = 0,8 | = 1 dB |
| | pertes totales = 15,7 dB |

On déduit de ce tableau que la puissance optique reçue par une unité périphérique $P_i$ est égale à: Pu $(R_i)$ = 3—20,2 = −17,3 dB m.

De même, la puissance optique détectée par l'unité centrale fixe est: Pu $(R_0)$ = 0—15,7 dBm.

Ces puissances optiques sont largement supérieures aux puissances optiques nécessaires aux détecteurs $R_0$ et $R_i$ pour obtenir un taux d'erreur inférieur à $10^{-9}$ pour un débit numérique de 10 Mbit/s (marge supérieure à 10 dB).

L'invention n'est pas limitée à la réalisation qui vient d'être décrites et en particulier l'application de l'architecture proposée par l'invention n'est pas limitée à une antenne à balayage électronique. L'invention est également applicable à tout équipement faisant appel à une liaison bidirectionnelle entre d'une part une partie mobile (tournante) contenant des unités périphériques et, d'autre part, une partie fixe contenant une unité centrale. Cette unité centrale peut en outre comprendre plusieurs sous-systèmes reliés entre eux. Dans ce cadre d'applications, on peut citer de façon non limitative, la télémesure dans les machines tournantes.

Enfin, bien que spécialement avantageux dans le cadre des applications qui viennent d'être rappelées, les dispositions de l'invention peuvent également être retenues dans le cadre d'une liaison bidirectionnelle entre deux systèmes fixes mais dont l'un est difficilement accessible et ne peut être alimenté en énergie que de façon limitée. La nature dissymétrique de la liaison proposée par l'invention autorise un bon bilan énergétique. Il suffit de supprimer le joint tournant pour cette application.

## Revendications

1. Système de liaison optique pour l'échange bidirectionnel de données entre une unité centrale $(P_0)$ et des unités périphériques $(P_i)$ comprenant des premiers moyens de liaison par fibres optiques couplés à des premiers organes émetteur et détecteur d'énergie rayonnante $(E_0, R_0)$ solidaires de l'unité centrale; des moyens dérivateurs-mélangeurs $(Fc_1/Fc_2)$ pour faisceau de fibres optiques; et des seconds moyens de liaison par fibres optiques $(F_i)$ couplés à des seconds organes émetteurs et détecteurs d'énergie rayonnante $(E_i/R_i)$ solidaires des unités périphériques; lesdits premiers moyens de liaison comportant une fibre optique unique $(FE_0)$ constituant une voie d'échange de données unidirectionnelle couplée par une extrémité auxdits moyens dérivateurs-mélangeurs $(Fc_1/Fc_2)$, caractérisé en ce que le premier organe détecteur d'énergie rayonnante est constitué par une photodiode $(R_0)$ dont la zone active (106) est dotée d'une structure annulaire, la photodiode présentant à l'intérieur de cette structure annulaire un passage (16) de diamètre intérieur égal ou supérieur au diamètre extérieur de la fibre optique unique $(FE_0)$, pour être enfilée sur cette fibre au voisinage de l'extrémité couplée auxdits moyens dérivateurs-mélangeurs $(Fc_1/Fc_2)$ et couplée elle-même sans moyen de liaison intermédiaire à ces moyens dérivateurs-mélangeurs, et en ce que le premier organe émetteur d'énergie rayonnante est constitué par une source laser $(E_0)$ couplée à l'autre extrémité de la fibre optique unique $(FE_0)$.

2. Système selon la revendication 1, caractérisé en ce que les seconds moyens de liaison par fibres optiques comprennent un faisceau de fibres optiques $(F_i)$ couplées en une première extrémité aux moyens dérivateurs-mélangeurs, chaque fibre optique constituant une voie d'échange de données bidirectionnelle, et en ce que ces fibres optiques sont en outre couplées en leur seconde extrémité à une diode semiconductrice $(E_1/R_1)$ capable de fonctionner en émetteur et en détecteur d'énergie rayonnante de même longueur d'onde, alternativement, par inversion de polarite; les diodes semiconductrices constituant les seconds organes émetteurs et détecteurs d'énergie rayonnante.

3. Système selon l'une quelconque des revendications 1 à 2, caractérisé en ce que les moyens dérivateurs-mélangeurs comportent une fibre optique mélangeuse unique $(Fc_1/Fc_2)$ de section circulaire pour interconnecter entre eux deux faisceaux de fibres optiques constitués respectivement par des premiers et des seconds moyens de liaison; fibre optique comportant un guide d'onde optique central limité par des faces terminales associées aux deux faisceaux de fibres optiques et formant canal de liaison principal entre les unités périphériques $(P_i)$ et l'unité centrale $(P_0)$.

4. Système selon la revendication 2, caractérisé en ce que, les unités périphériques $(P_i)$ étant en outre solidaires d'un bâti (UM) animé d'un mouvement de rotation autour d'un axe $(\Delta)$, et l'unité centrale $(P_0)$ étant fixe, la fibre optique est scindée en deux parties $(Fc_1, Fc_2)$ couplées l'une à l'autre par un joint optique tournant (CT) de même axe de rotation.

5. Système selon l'une quelconque des revendications 1 à 3, caractérisé en ce que, O.N. $(FE_0)$ étant l'ouverture numérique de la fibre optique unique, des premiers moyens de liaison, O.N. $(F_i)$ l'ouverture numérique de l'une quelconque des fibres optiques constituant les seconds moyens de liaison et O.N. $(Fc_1)$, O.N. $(Fc_2)$ les ouvertures numériques respectives des deux parties de la fibre optique mélangeuses, les relations suivantes sont vérifiées:

— O.N. $(F_i)$ = O.N. $(Fc_2)$ = O.N. $(Fc_1)$

— O.N. $(FE_0)$ $\leq$ O.N. $(Fc_1)$

6. Utilisation d'un système selon l'une quelconque des revendications 1 à 4, dans une antenne à

balayage électronique d'une onde électromagnétique émise par un aérien animé d'un mouvement de rotation pour assurer l'échange bidirectionnel de données entre un calculateur central fixe ($P_0$) et des modules de calcul périphérique ($P_i$) commandant des modules de déphasage de l'onde électromagnétique émise; les modules de calcul et les modules de déphasage étant solidaires de l'aérien (UF).

**Patentansprüche**

1. Optisches Verbindungssystem für den bidirektionalen Austausch von Daten zwischen einer Zentraleinheit ($P_0$) und peripheren Einheiten ($P_i$), mit ersten Verbindungsmitteln zur Verbindung durch optische Fasern bzw. Lichtleiter, die an erste Strahlungsenergie-Sende- und Detektororgane ($E_0$, $R_0$) angekoppelt sind, welche der Zentraleinheit zugehörig sind; Abzweig- und Mischeinrichtungen ($Fc_1/Fc_2$) für optische Faserbündel; und zweiten Verbindungsmitteln zur Verbindung über optische Fasern ($F_i$), die an zweite Strahlungsenergie-Sende- und Detektororgane ($E_i/R_i$) angekoppelt sind, welche den peripheren Einheiten zugehörig sind; wobei die ersten Verbindungsmittel eine einzige optische Faser ($FE_0$) enthalten, die einen eindirektionalen Datenaustauschweg bilden, welcher an einem Ende an die Abzweig- und Mischeinrichtung ($Fc_1/Fc_2$) angekoppelt ist, dadurch gekennzeichnet, daß das erste Strahlungsenergie-Detektororgan begildet ist aus einer Photodiode ($R_0$), deren aktive Zone (106) mit einer Ringstruktur versehen ist, wobei die Photodiode im Inneren dieser Ringstruktur einen Durchgang (16) aufweist, dessen Innendurchmesser gleich dem Außendurchmesser der einzigen optischen Faser ($FE_0$) oder größer als dieser ist, um auf diese Faser in der Nähe ihres an die Abzweig- und Mischeinrichtung ($Fc_1/Fc_2$) angekoppelten Endes aufgeschoben zu werden und ihrerseits ohne Mittel zur Zwischenverbindung an diese Abzweig- und Mischeinrichtung angekoppelt zu sein, und daß das erste Strahlungsenergie-Sendeorgan aus einer Laserdiode ($E_0$) gebildet ist, die an das andere Ende der einzigen Optischen Faser ($FE_0$) angekoppelt ist.

2. System nach Anspruch 1, dadurch gekennzeichnet, daß die zweiten Verbindungsmittel zur Verbindung über optische Fasern ein Bündel von optischen Fasern ($F_i$) umfassen, das an einem ersten Ende and die Abzweig- und Mischeinrichtung angekoppelt ist, wobei jede optische Faser einen bidirektionalen Datenaustauschweg bildet, und daß diese optischen Fasern ferner an ihrem zweiten Ende an eine Halbleiterdiode ($E_1/R_1$) angekoppelt sind, die imstande ist, als Sender und als Detektor für Strahlungsenergie der selben Wellenlänge abwechselnd zu arbeiten, indem ihre Polarität invertiert wird; wobei die Halbleiterdioden die zweiten Strahlungsenergie-Sende- und Detektororgane bilden.

3. System nach Anspruch 1 oder 2, dadurch gekennzeichnet, daß die Abzweig- und Mischeinrichtung eine einzige optische Mischfaser ($Fc_1/Fc_2$) kreisförmigen Querschnitts umfaßt, um zwei optische Faserbündel miteinander zu verbinden, die durch die ersten bzw. durch die zweiten Verbindungsmittel gebildet sind; wobei die optische Faser einen zentralen optischen Wellenleiter umfaßt, der durch Endflächen begrenzt ist, welche den optischen Faserbündeln zugeordnet sind, und welcher den Hauptverbindungskanal zwischen den peripheren Einheiten ($P_i$) und der Zentraleinheit ($P_0$) bildet.

4. System nach Anspruch 2, dadurch gekennzeichnet, daß die peripheren Einheiten ($P_i$) ferner fest verbunden sind mit einem Gerüst (UM), das eine Drehbewegung um eine Achse ($\Delta$) ausführt, während die Zentraleinheit ($P_0$) feststehend ausgebildet ist, und daß die optische Faser in zwei Teile ($Fc_1$, $Fc_2$) geteilt ist, die miteinander durch eine Drehkupplung (CT) verbunden sind, welche dieselbe Rotationsachse aufweist.

5. System nach einem der Ansprüche 1 bis 3, dadurch gekennzeichnet, daß folgende Beziehungen bestehen, wenn O.N. ($FE_0$) die numerische Apertur der einzigen optischen Faser der ersten Verbindungsmittel, O.N. ($F_i$) die numerische Apertur einer beliebigen der optischen Fasern, welche die zweiten Verbindungsmittel bilden, und O.N. ($Fc_1$), O.N. ($Fc_2$) die numerischen Aperturen der beiden Teile der optischen Mischfaser sind:

— $O.N. (F_i) = O.N. (Fc_2) = (Fc_1)$

— $O.N. (FE_0) \leqslant O.N. (Fc_1)$.

6. Verwendung eines Systems nach einem der Ansprüche 1 bis 4 in einer Antenne mit elektronischer Verschwenkung einer elektromagnetischen Welle, die durch einen Strahler abgestrahlt wird, welche eine Drehbewegung ausführt, um den bidirecktionalen Datenaustausch zwischen einem zentralen feststehenden Rechner ($P_0$) und peripheren Rechenmodulen ($P_i$) zu gewährleisten, zur Steuerung von Moduln zur Phasenverschiebung der abgestrahlten elektromagnetischen Welle; wobei die Rechenmoduln und die Phasenschiebermoduln mit dem Strahler (UF) fest verbunden ist.

**Claims**

1. Optical connection system for the bidirectional data exchange between a central unit ($P_0$) and peripheral units ($P_i$) comprising first, optical fiber connection means coupled to first radiating energy transmitter and detector members ($E_0$, $R_0$) joined with the central unit; deriving and mixing means ($Fc_1/Fc_2$) for an optic fiber bundle; and second optical fiber connection means ($F_i$) coupled to second

radiating energy transmitter and detector members ($E_i/R_i$) joined with the peripheral units; said first connecting means comprising a single optical fibre ($FE_0$) forming a unidirectional data exchange path coupled to said deriving and mixing means ($Fc_1/Fc_2$) at one of its ends, characterized in that the first radiating energy detection member is formed of a photodiode ($R_0$) the active zone (106) of which is provided with an annular structure, the photodiode having inside this annular structure a passage (16) the inner diameter of which is equal to or in excess of the outer diameter of the single optical fiber ($FE_0$), in order to be threaded onto said fiber in the neighborhood of the end coupled to said deriving and mixing means ($Fc_1/Fc_2$), and coupled itself to these deriving and mixing means without interposition of intermediate connection means, and in that the first radiating energy transmitter member is formed of a laser source ($E_0$) coupled to the other end of the single optical fiber ($FE_0$).

2. System in accordance with claim 1, characterized in that the second optical fiber connection means comprise an optical fiber bundle ($F_i$) coupled to the first deriving and mixing means at a first end thereof, each optical fiber forming a bidirectional data exchange path, and in that these optical fibers are further coupled to a semiconductor diode ($E_1/R_1$) at the second end thereof, said semiconductor diode being capable of alternatively operating, by polarity inversion, as a transmitter or as a detector of radiating energy of the same wavelength; the semiconductor diodes forming the second radiating energy transmitter and detector means.

3. System in accordance with any of claims 1 and 2, characterized in that the deriving and mixing means comprise a single optical mixing fibers ($Fc_1/Fc_2$) having a circular section for interconnecting two optical fiber bundles with each other respectively formed of the first and second connection means; the optical fiber comprising a central optical waveguide ending in terminal faces associated with the two optical fiber bundles and forming a main connection channel between the peripheral units ($P_i$) and the central unit ($P_0$).

4. System in accordance with claim 2, characterized in that, the peripheral units ($P_i$) being further joined with a stand (UM) performing a rotational movement about an axis ($\Delta$), and the central unit ($P_0$) being stationary, the optical fiber being divided into two portions ($Fc_1$, $Fc_2$) coupled with each other through a rotating optical coupling (CT) having the same rotational axis.

5. System in accordance with any of claims 1 to 3, characterized in that, O.N. ($FE_0$) being the numerical aperture of the single optical fiber of the first connection means, O.N. ($F_i$) the numerical aperture of any of the optical fibers forming the second connection means, and O.N. ($Fc_1$), O.N. ($Fc_2$) the respective numerical apertures of the two portions of the optical mixing fiber, the following relations hold:

— O.N. ($F_i$) = O.N. ($Fc_2$) = O.N. ($Fc_1$)

— O.N. ($FE_0$) $\leqslant$ O.N. ($Fc_1$)

6. Use of a system in accordance with any of claims 1 to 4, in an electronic scanning antenna in which an electromagnetic wave is radiated by an aerial performing a rotational movement, for assuring a bidirectional data exchange between a stationary central computer ($P_0$) and peripheral computing modules ($P_i$), for controlling phase-shifting modules for phase-shifting of the radiated electromagnetic wave; the computing modules and the phase-shifting modules being joined with the aerial (UF).

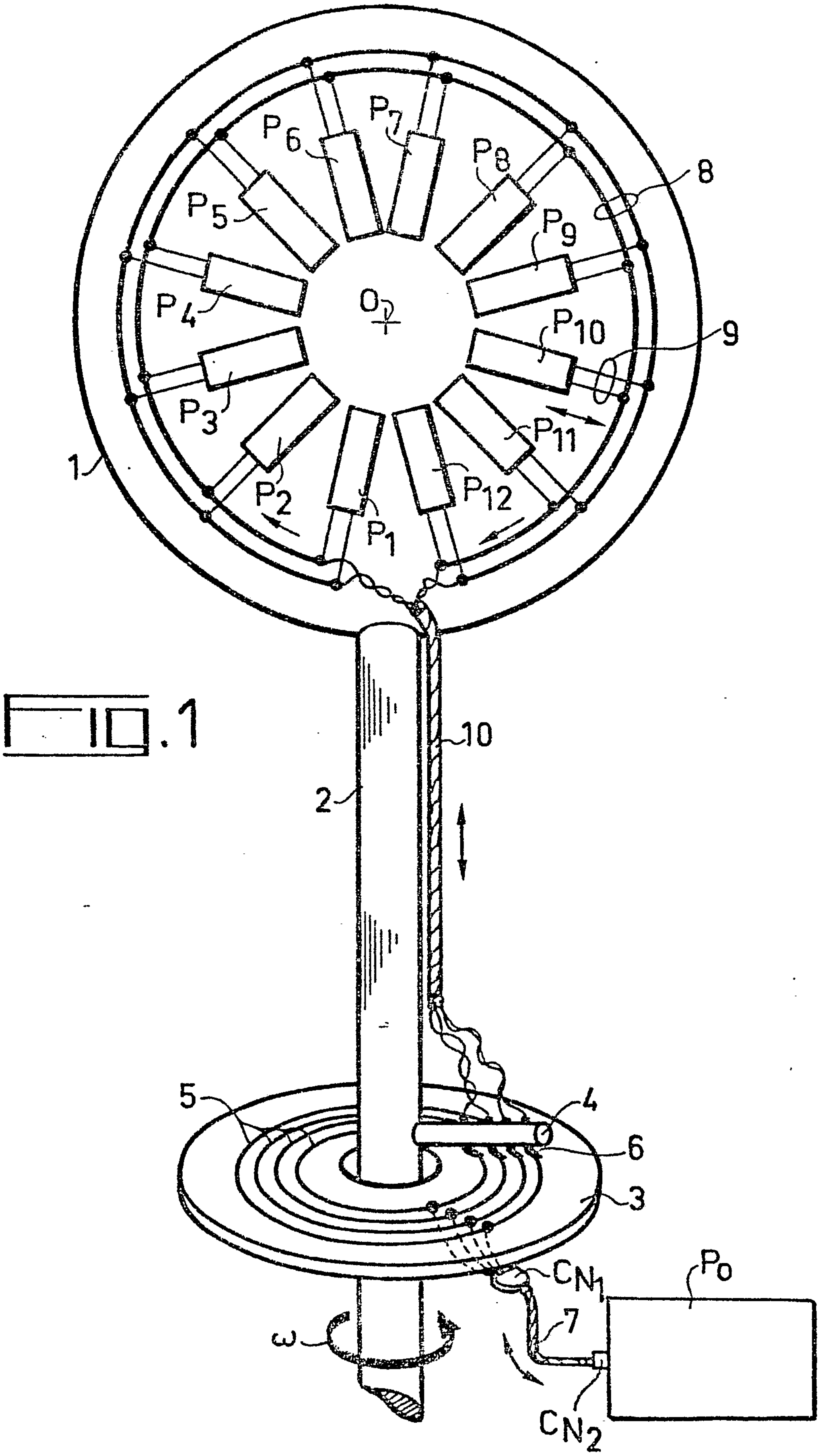


FIG.1

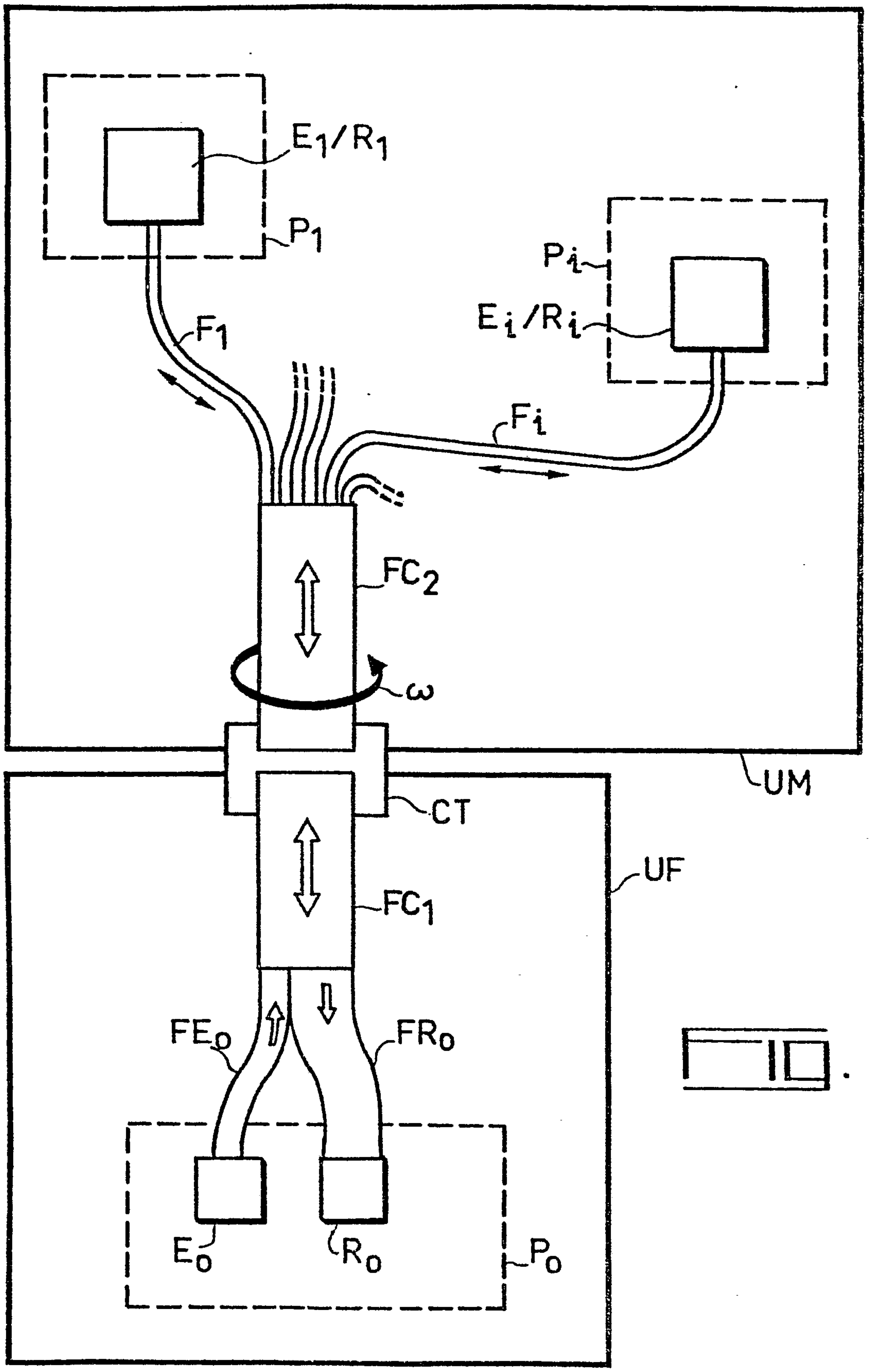


FIG. 2

Fig. 3

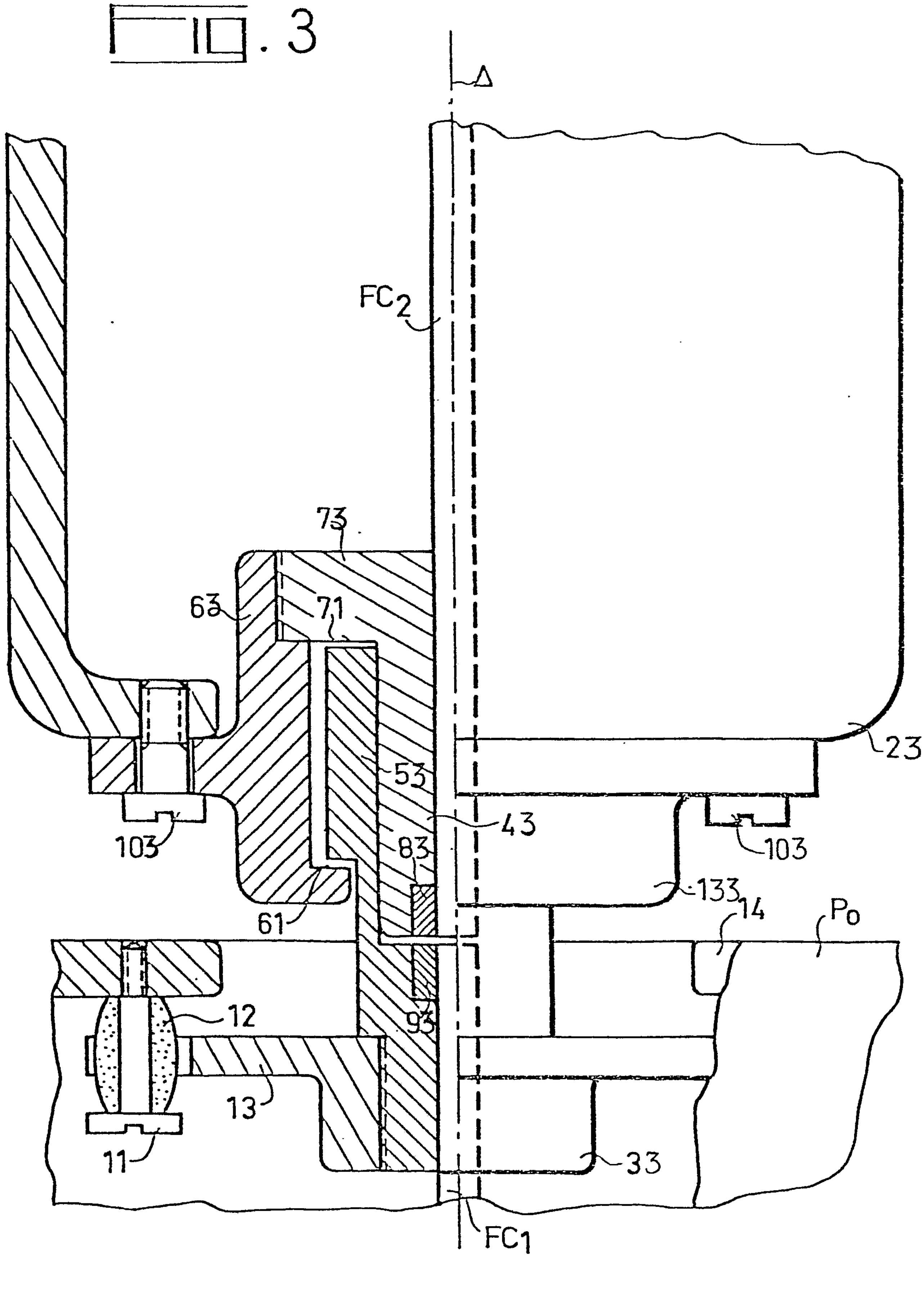

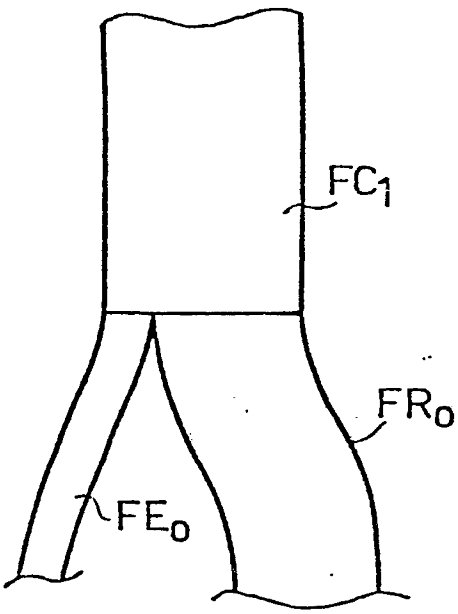


Fig. 4

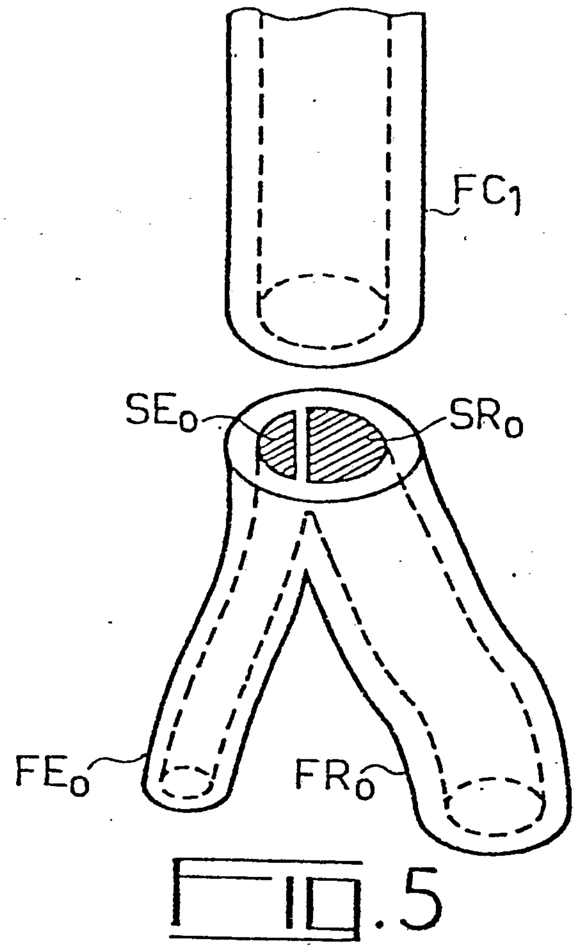


Fig. 5

Fig. 6